(19)

**Europäisches Patentamt**
**European Patent Office**
**Office européen des brevets**

(11) **EP 4 745 629 A1**

(12) **EUROPEAN PATENT APPLICATION**

(43) Date of publication:
**20.05.2026 Bulletin 2026/21**

(21) Application number: **25211975.5**

(22) Date of filing: **29.10.2025**

(51) International Patent Classification (IPC):
**G02B 1/111** (2015.01)    **C03C 17/34** (2006.01)
**G02B 1/118** (2015.01)

(52) Cooperative Patent Classification (CPC):
**G02B 1/111; C03C 17/42; G02B 1/118;**
C03C 2217/734

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.11.2024 JP 2024197983**

(71) Applicant: **Canon Kabushiki Kaisha
Tokyo, 146-8501 (JP)**

(72) Inventor: **UCHIDA, Kazue
Tokyo, 146-8501 (JP)**

(74) Representative: **Canon Europe Limited
European Intellectual Property Group
4 Roundwood Avenue
Stockley Park
Uxbridge UB11 1AF (GB)**

(54) **ANTIREFLECTION FILM, AND OPTICAL ELEMENT AND OPTICAL DEVICE INCLUDING SAME**

(57)    An antireflection film that is formed on an optical surface of a base material includes first to fourth layers disposed in order from a side of the base material. The fourth layer has a refractive index that decreases as the fourth layer is away from the base material. The following inequalities are satisfied: $n1 > n2$, $n2 < n3$, and $n3 > n4$, where $n1$, $n2$, and $n3$ are refractive indices of the first to third layers respectively at a wavelength of 550 nm, and $n4$ is a maximum value of the refractive index of the fourth layer at a wavelength of 550 nm.

FIG. 1

**Description**

TECHNICAL FIELD

The present disclosure relates to an antireflection film suitable for an optical device such as a digital still camera, a digital video camera, a silver-halide film camera, or a telescope.

BACKGROUND

Japanese Patent Laid-Open No. 2014-21146 describes an antireflection film formed of two layers each having a refractive index that decreases as the layers are away from a base material.
The antireflection film described in Japanese Patent Laid-Open No. 2014-21146 is designed such that the refractive index of a first layer adjacent to the base material is less than or equal to the refractive index of the base material and the refractive index of a second layer is less than or equal to the refractive index of the first layer.

SUMMARY

The present disclosure in its first aspect provides an antireflection film as specified in claim 1. Optional features are specified in claims 2 to 16.
The present disclosure in its second aspect provides an optical element as specified in claim 17.
The present disclosure in its third aspect provides an optical system as specified in claim 18.
The present disclosure in its fourth aspect provides an optical device as specified in claim 19.
The present disclosure in its fifth aspect provides an image pickup apparatus as specified in claim 20.
Features of the present disclosure will become apparent from the following description of embodiments with reference to the attached drawings. The following description of embodiments is described by way of example.

BRIEF DESCRIPTION OF THE DRAWINGS

Fig. 1 shows a schematic view of an antireflection film according to a first embodiment and a view of an example of a change in refractive index thereof.
Fig. 2 shows graphs of a change in refractive index and reflectance characteristics of an antireflection film according to Example 1.
Fig. 3 shows graphs of a change in refractive index and reflectance characteristics of an antireflection film according to Example 2.
Fig. 4 shows graphs of a change in refractive index and reflectance characteristics of an antireflection film according to Example 3.
Fig. 5 shows graphs of a change in refractive index and reflectance characteristics of an antireflection film according to Example 4.
Fig. 6 shows graphs of a change in refractive index and reflectance characteristics of an antireflection film according to Example 5.
Fig. 7 shows graphs of a change in refractive index and reflectance characteristics of an antireflection film according to Example 6.
Fig. 8 shows graphs of a change in refractive index and reflectance characteristics of an antireflection film according to Example 7.
Fig. 9 shows graphs of a change in refractive index and reflectance characteristics of an antireflection film according to Example 8.
Fig. 10 shows graphs of a change in refractive index and reflectance characteristics of an antireflection film according to Example 9.
Fig. 11 shows a schematic view of an antireflection film according to a second embodiment.
Fig. 12 shows graphs of a change in refractive index and reflectance characteristics of an antireflection film according to Example 10.
Fig. 13 shows a schematic view of an optical system according to an embodiment.
Fig. 14 shows a schematic view of an image pickup apparatus according to an embodiment.

DESCRIPTION OF THE EMBODIMENTS

Hereinafter, suitable embodiments of the present disclosure will be described with reference to the accompanying drawings. In addition, each of the accompanying drawings may be drawn at a scale different from the actual scale for convenience. Further, in each of the accompanying drawings, the same members are denoted by the same reference numerals, and the redundant description thereof will not be provided. Each of the embodiments of the present invention described below can be implemented solely or as a combination of a plurality of the embodiments or features thereof where necessary or where the combination of elements or features from individual embodiments in a single embodiment is beneficial.

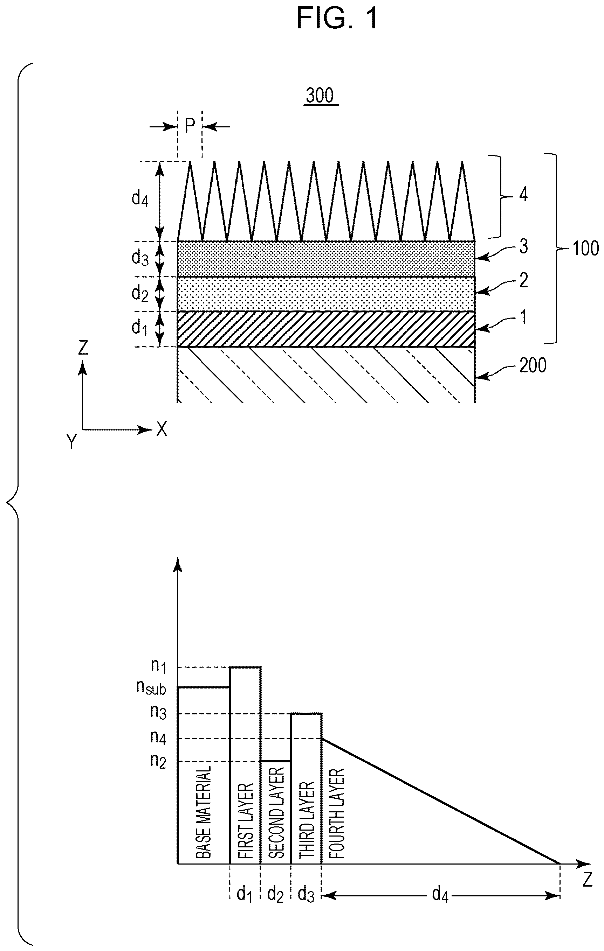

The upper view of Fig. 1 is a schematic view showing an optical element 300 including an antireflection film 100 according to a first embodiment and a base material (transparent substrate) 200, and the lower view of Fig. 1 is a schematic view showing a change in refractive index (refractive index structure) of the optical element 300. In the upper view of Fig. 1, a direction (film thickness direction) from a side of the base material 200 to an air side is defined as a Z direction, and directions (radial direction) perpendicular to the Z direction are defined as an X direction and a Y direction.

The antireflection film 100 includes a first layer (first thin film layer) 1, a second layer (second thin film layer) 2, a third layer (third thin film layer) 3, and a fourth layer (refractive index changing layer) 4, which are disposed in order from a side of the base material 200 on the surface (optical surface) of the base material 200. The fourth layer 4 is a refractive index changing layer (graded layer) having a refractive index that decreases as the layer is away (in the film thickness direction) from the base material. In the present embodiment, a concavo-convex layer (concavo-convex structure) in which a plurality of convex portions (structures) are arranged in a radial direction is employed as the refractive index changing layer. Each convex portion has a shape in which the volume thereof decreases in the film thickness direction, and thus the space occupation ratio of each convex portion decreases (the space occupation ratio of air increases) in the film thickness direction. As a result, as shown in the lower view of Fig. 1, the effective refractive index (average refractive index) of the concavo-convex layer decreases in the film thickness direction. Further, in order to improve the antireflection performance of the antireflection film 100, the refractive index of the fourth layer 4 can be changed monotonously and suitably continuously. However, the refractive index of the fourth layer 4 may be changed intermittently as necessary.

In the fourth layer 4 according to the present embodiment, an array pitch (pitch) p of the plurality of convex portions is shorter than the wavelength (used wavelength) of used light. The pitch p corresponds to the pitch between convex portions (pitch between valleys) adjacent to each other as shown in the upper view of Fig. 1. The concavo-convex layer can have the same effect on the used light as the effect of the refractive index changing layer where a plurality of convex portions are not present, by setting the pitch p to be shorter than the used wavelength. Here, the pitch p is not limited as long as the pitch p is shorter than the used wavelength, but the pitch p can be set to 400 nm or less in consideration of the typical environment where the antireflection film 100 is used. Further, the array pitch of the plurality of convex portions may or may not show periodicity.

The fourth layer 4 can change the refractive index at the interface between the antireflection film 100 and air in the film thickness direction. Here, most of the reflected light generated in the concavo-convex structure cancels out each other. Accordingly, in a case where the fourth layer 4 is provided directly on the base material 200, the reflection occurs only at the interface between the fourth layer 4 and the base material 200 in the antireflection film 100. Therefore, in order to cancel out the reflection, the number of interfaces can be increased by providing a plurality of layers between the fourth layer 4 and the base material 200, and the reflected light generated at each interface can be designed to cancel out each other.

For this reason, the antireflection film 100 according to the present embodiment is designed such that the number of interfaces is 4 or more. Specifically, each of the interfaces is formed between the base material 200 and the first layer 1, the first layer 1 and the second layer 2, the second layer 2 and the third layer 3, and the third layer 3 and the fourth layer 4.

Here, Inequalities (1) to (3) can be satisfied when $n_1$, $n_2$, and $n_3$ are the refractive indices of the first layer 1, the second layer 2, and the third layer 3 at a wavelength of 550 nm (reference wavelength) respectively, and $n_4$ is the maximum value of the refractive index of the fourth layer 4 at a wavelength of 550 nm. When Inequalities (1) to (3) are satisfied, the reflected light generated at each interface easily cancels out each other satisfactorily.

$$n_1 > n_2 \qquad (1)$$

$$n_2 < n_3 \qquad (2)$$

$$n_3 > n_4 \qquad (3)$$

It is generally known that the refractive index of an antireflection film can be changed to monotonously decrease from the base material side to the air side. However, since the types and the compositional ratio of the materials constituting each layer are required to be changed according to the material of the base material, appropriate materials for each layer of an antireflection film are difficult to select (low degree of freedom in selecting the material) depending on the material of the base material, and thus an antireflection film appropriate for the base material is difficult to provide in some cases. Therefore, satisfactory antireflection performance can be obtained without monotonously changing the refractive index of the antireflection film 100 when the fourth layer 4 is formed as the refractive index changing layer as described above and Inequalities (1) to (3) are satisfied. That is, the degree of freedom in selecting the material of the antireflection film 100 can be improved.

Specifically, when Inequality (1) is satisfied, since the refractive index of the first layer 1, which is the layer closest to the base material 200, relatively increases, a material appropriate for a typical optical material to be used as the base material 200 is likely to be selected. Further, when Inequalities (1) and (2) are satisfied, the refractive index of the second layer 2 is less than the refractive indices of the adjacent first layer 1 and third layer 3. In this manner, the reflected light generated at the interface between the base material 200 and the first layer 1 is easily canceled out by the reflected light generated at the interfaces between the second layer 2, the first layer 1, and the third layer 3. That is, satisfactory antireflection performance is easily obtained without setting the refractive index of the first layer 1 to be less than or equal to the refractive index of the base material 200 as described in Japanese Patent Laid-Open No. 2014-21146.

Further, in the configuration satisfying Inequalities (1) to (3), Inequalities (4) to (6) can be satisfied.

$$1.52 \leq n_1 \leq 1.85 \qquad (4)$$

$$1.25 \leq n_2 < 1.45 \qquad (5)$$

$$1.40 \leq n_3 \leq 1.60 \qquad (6)$$

Ease of production and the antireflection performance can be improved by selecting materials satisfying Inequalities (4) to (6) as the materials for each layer. Further, the fourth layer 4 may be a refractive index changing layer in which the maximum value of the refractive index is less than the refractive index of the third layer 3. In addition, Inequalities (4a) to (6a) can be satisfied.

$$1.55 \leq n_1 \leq 1.75 \qquad (4a)$$

$$1.30 \leq n_2 < 1.40 \qquad (5a)$$

$$1.45 \leq n_3 \leq 1.55 \qquad (6a)$$

Further, Inequalities (7) to (9) can be satisfied when $d_1$, $d_2$, $d_3$, and $d_4$ are the film thicknesses of the first layer 1, the second layer 2, the third layer 3, and the fourth layer 4 respectively. Here, the film thicknesses denote the physical film thicknesses (which are not optical film thicknesses) on a reference axis (an optical axis or a central axis) passing through a surface vertex of the optical surface without taking the refractive index into consideration.

$$3 \text{ nm} \leq d_1 \leq 90 \text{ nm} \qquad (7)$$

$$5 \text{ nm} \leq d_2 \leq 45 \text{ nm} \qquad (8)$$

$$100 \text{ nm} \leq d_3 + d_4 \leq 350 \text{ nm} \qquad (9)$$

The antireflection performance can be further improved by appropriately setting the film thickness of each layer such that Inequalities (7) to (9) are satisfied. Further, Inequalities (7a) to (9a) and (9b) can be satisfied.

$$5 \text{ nm} \leq d_1 \leq 50 \text{ nm} \qquad (7a)$$

$$10 \text{ nm} \leq d_2 \leq 40 \text{ nm} \qquad (8a)$$

$$3 \text{ nm} \leq d_3 \leq 50 \text{ nm} \qquad (9a)$$

$$150 \text{ nm} \leq d_4 \leq 300 \text{ nm} \qquad (9b)$$

Further, Inequality (10) can be satisfied when $n_{sub}$ is the refractive index of the base material. When Inequality (10) is satisfied, satisfactory antireflection performance is easily obtained without setting the refractive index of the first layer 1 to be less than or equal to the refractive index of the base material 200, as described in Japanese Patent Laid-Open No. 2014-21146.

$$n_2 < n_{sub} < n_1 \qquad (10)$$

Here, for example, Inequality (11) may be satisfied as necessary when the antireflection performance is prioritized over the degree of freedom in selecting the material.

$$n_2 < n_1 < n_{sub} \qquad (11)$$

The first layer 1 and the second layer 2 according to the present embodiment can be formed by a dry film forming method (dry coating) such as a vacuum vapor deposition method or a sputtering method, or a wet film forming method (wet coating) such as a sol-gel method. Here, in order to suppress the occurrence of a variation in film thickness in a plane of each layer, each layer can be formed by a wet film forming method of coating a coating surface with a coating solution and drying and calcining the coating solution. Particularly, among examples of the wet film forming method, a spin coat method of coating a coating surface with a coating solution while rotating the coating surface can be employed.

The first layer 1 can be (preferably) formed of a material that contains an organic compound having at least one of an aromatic ring and an imide ring. Here, organic compounds denote compounds containing carbon, excluding compounds having simple structures, such as carbon monoxide and carbon dioxide. The material containing an organic compound can be easily formed by the wet film forming method. Further, since the organic compound (polymer) having an aromatic ring or an imide ring has a planar structure, molecular chains in a layer having these structures in the main chain are easily aligned parallel to the coating surface during film formation. Therefore, when the first layer has an aromatic ring or an imide ring, the uniformity in the film thickness and the refractive index of the first layer 1 can be improved.

Further, these materials have high mechanical properties even without being cured by a high-temperature treatment, and thus are suitable for a bottom layer (layer adjacent to the base material 200) in a case where a plurality of layers are laminated on the base material 200. In addition, such a polymer having a planar structure can be easily peeled off from the base material 200 by being wiped using a solvent (solvent wiping) in a radial direction parallel to the surface of the base material 200. Therefore, even in a case where defects occur during the production, the base material 200 can be easily regenerated by performing solvent wiping.

The polymer used in the first layer 1 may be a polymer having at least one of an aromatic ring and an imide ring in the main chain, or may be any of a thermosetting resin or a thermoplastic resin. However, a thermoplastic resin can be employed when considering that the refractive index and the film thickness do not change under baking conditions and the amount of residual uncured monomers is small. Examples of such a thermoplastic resin include thermoplastic polyimide (polyimide resin), aromatic polyamide, a melamine polymer, polymaleimide (maleimide resin), aromatic polyethers such as polyether ketone and polyether sulfone, aromatic polyesters such as polyethylene terephthalate, aromatic polycarbonate, aromatic polyurethane, and aromatic polyurea.

Among these, from the viewpoint that the base material 200 is easily regenerated by solvent wiping, thermoplastic polyimide can be used.

The second layer 2 can be (preferably) formed of a material containing an organic compound, which can be easily formed by a wet film forming method. Here, the second layer 2 is required to have a refractive index less than the refractive indices of other layers, and thus can be formed of a material containing fine particles in order to easily have a low refractive index. In this case, the second layer 2 contains suitably solid particles and more suitably solid particles (solid silica particles) particularly formed of silicon dioxide ($SiO_2$). Particles bound with a binder having a structure such as a siloxane bond can be employed as the solid silica particles.

An organic solvent that can be used in the coating solution for the first layer 1 and the second layer 2 is not particularly limited and can be selected within a range where the coating properties, the performance, and the like are not impaired. Examples of the organic solvent include monohydric alcohols such as methanol, ethanol, 1-propanol, 2-propanol, 1-butanol, 2-butanol, 2-methylpropanol, 1-pentanol, 2-pentanol, cyclopentanol, 2-methylbutanol, 3-methylbutanol, 1-hexanol, 2-hexanol, 3-hexanol, 4-methyl-2-pentanol, 2-methyl-1-pentanol, 2-ethylbutanol, 2,4-dimethyl-3-pentanol, 3-ethylbutanol, 1-heptanol, 2-heptanol, 1-octanol, and 2-octanol, di- or higher polyhydric alcohols such as ethylene glycol and triethylene glycol, ether alcohols such as methoxyethanol, ethoxyethanol, propoxyethanol, isopropoxyethanol, butoxyethanol, 1-methoxy-2-propanol, 1-ethoxy-2-propanol, and 1-propoxy-2-propanol, ethers such as dimethoxyethane, diglyme, tetrahydrofuran, dioxane, diisopropyl ether, dibutyl ether, and cyclopentyl methyl ether, esters such as ethyl formate, ethyl acetate, n-butyl acetate, methyl lactate, ethyl lactate, ethylene glycol monomethyl ether acetate, ethylene glycol monoethyl ether acetate, ethylene glycol monobutyl ether acetate, and propylene glycol monomethyl ether acetate, various aliphatic or alicyclic hydrocarbons such as n-hexane, n-octane, cyclohexane, cyclopentane, and cyclooctane, various aromatic hydrocarbons such as toluene, xylene, and ethylbenzene, various ketones such as acetone, methyl ethyl ketone, methyl isobutyl ketone, cyclopentanone, and cyclohexanone, chlorinated hydrocarbons such as chloroform, methylene chloride, carbon tetrachloride, and tetrachloroethane, and aprotic polar solvents such as N-methylpyrrolidone, N,N-dimethylformamide, N,N-dimethylacetamide, and ethylene carbonate. Further, a solution obtained by mixing two or more types of solvents may be used as the coating solution.

The third layer 3 according to the present embodiment can also be formed by a dry film forming method or a wet film forming method, similar to the first and second layers. Meanwhile, examples of the film forming method for the fourth layer 4 include a method of forming a concavo-convex structure using a nanoimprinting method or an etching method and a method of forming plate-like crystals by peptization of aluminum oxide (alumina). In this case, the method using peptization of aluminum oxide can be employed in order to simplify a step of producing the antireflection film 100. According to this method, the third layer 3 and the fourth layer 4 can be formed simultaneously.

A specific example of this method will be described. First, an aluminum oxide precursor sol is dried or calcined to form a porous layer containing amorphous aluminum oxide. Thereafter, the porous layer is immersed in hot water to form a concavo-convex structure formed of protrusion-like crystals (plate-like crystals) containing aluminum oxide as a main component. In this case, the porous layer after the immersion in hot water does not entirely have a concavo-convex structure, and partially remains as the porous layer. Therefore, this remaining porous layer is the third layer 3, and the layer having the concavo-convex structure is the fourth layer 4. Accordingly, each of the third layer 3 and the fourth layer 4 can contain aluminum oxide. Further, the third layer 3 can be a porous layer containing aluminum oxide, and the fourth layer 4 can be a concavo-convex layer containing aluminum oxide as a main component.

The film thickness of the porous layer serving as the third layer 3 can be adjusted by the composition of the aluminum oxide precursor sol, the temperature of hot water, and the immersion time in hot water. In this case, the third layer 3 can be made extremely thin depending on the film forming conditions. Further, a method of forming the porous layer that is formed before the hot water treatment is not particularly limited. However, for the above-described reason, the porous layer can be formed by suitably a wet film forming method and particularly suitably a spin coat method similar to the first and second layers. In this manner, three layers of the first layer 1, the second layer 2, and the porous layer can be sequentially formed by the spin coat method, and the step of producing the antireflection film 100 can be more simplified.

A functional layer having a specific function may be provided as necessary on an upper portion (air side) of the fourth layer 4. As the functional layer, for example, an antifouling layer for preventing stains, a hydrophilic layer or a water-repellent layer for reducing the influence on adhesion of water droplets, an adhesive layer for being bonded to other layers or the base material, a protective layer for improving durability, or the like can be employed. The antifouling layer can be a layer containing a fluoropolymer, a fluorosilane monomolecular layer, a layer containing titanium oxide particles, or the like. The hydrophilic layer is suitably a hydrophilic polymer layer and particularly suitably a layer containing a polymer that contains an amphoteric hydrophilic group such as a sulfobetaine group, a carbobetaine group, or a phosphorylcholine group. The adhesive layer can have a high transmittance after being cured, and can also be formed of an acrylic resin, an epoxy resin, or the like. The protective layer can be a layer containing phosphoric acid.

Further, in a case where the third layer 3 is a porous layer, a part of the functional layer may enter the inside (in the pores) of the third layer 3. For example, in a case where a protective layer is provided as a functional layer, the third layer 3 may also contain a part of the material of the protective layer. In this case, a material that does not impair much the antireflection performance of the third layer 3 can be employed as the material of the functional layer. For example, in the case where a protective layer is provided as the functional layer, a material containing phosphorus can be used as the material of the protective layer. In this case, the third layer 3 also contains phosphorus, and thus satisfactory antireflection performance can be maintained.

The material of the base material 200 may be a transparent material (light-transmitting material), and is not particularly limited. For example, an inorganic material such as a glass material or an organic material such as a resin material (plastic) can be employed as the base material 200. The shape of the base material 200 can be appropriately selected depending on the applications of the optical element 300, and may be any of a flat plate shape, a curved plate shape, or a film shape. That is, the surface (coating surface) of the base material 200 on which the antireflection film 100 is formed may be a plane or a curved surface. In a case where the coating surface is a curved surface, the curved surface may be a concave surface, a convex surface, or an aspherical surface.

Hereinafter, specific examples of the present embodiment will be described. However, these examples are merely examples of the present embodiment, and the present disclosure is not limited to the scope of each example.

Example 1

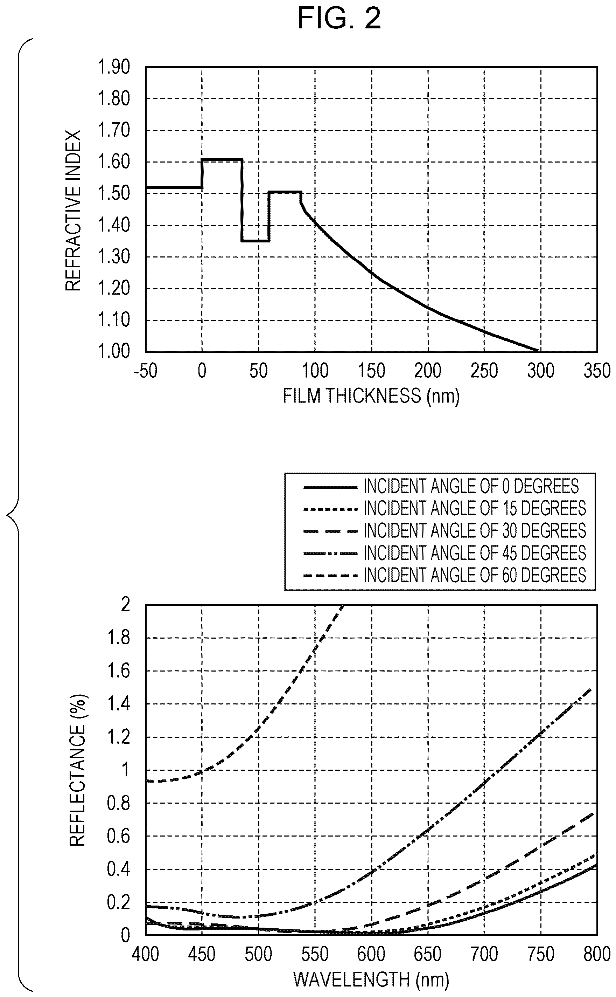

The upper graph of Fig. 2 shows a change in refractive index in the optical element 300 according to Example 1, that is, a refractive index structure of the base material 200 and the antireflection film 100.

The base material 200 according to the present example is formed of S-BSL7 (manufactured by OHARA INC.) having a refractive index of 1.52. In the antireflection film 100 according to the present example, the first layer 1 is formed of a material containing a polyimide resin as a main component, the second layer 2 is formed of a material containing solid silica as a main component, and the third layer 3 and the fourth layer 4 are formed of a material containing aluminum oxide as a main component.

A method of forming the antireflection film 100 of the present example is as follows. Generation of polyimide coating solution 1

Hexane was gradually added to 200 g of 4,4'-methylenebis(aminocyclohexane) (hereinafter, also referred to as DADCM, manufactured by Tokyo Chemical Industry Co., Ltd.) under reflux to completely dissolve the mixture. After the heating was stopped and the mixture was allowed to stand at room temperature for several days, the precipitate was separated by filtration and dried under reduced pressure, thereby obtaining 58 g of alicyclic diamine DADCM in a white solid state.

Three types of diamines, alicyclic diamine DADCM, aromatic diamine 4,4'-bis(4-aminophenoxy)diphenyl (product name BODA, manufactured by SEIKA CORPORATION), and siloxane-containing diamine 1,3-bis(3-aminopropyl)tetramethyldisiloxane (product name PAM-E, manufactured by Shin-Etsu Chemical Co., Ltd.), were dissolved in N,N-dimethylacetamide (hereinafter, referred to as DMAc) such that the total amount thereof reached 12 mmol.

About 12 mmol of an acid dianhydride was added to this diamine solution while cooling the solution with water. As the acid dianhydride, 4-(2,5-dioxotetrahydrofuran-3-yl)-1,2,3,4-tetrahydronaphthalene-1,2-dicarboxylic anhydride (product name TDA-100, manufactured by New Japan Chemical Co., Ltd.) was used. The amount of DMAc was adjusted such that the total mass of the diamines and the acid dianhydride reached 20% by weight.

This solution was stirred at room temperature for 15 hours to carry out a polymerization reaction. Further, the solution was diluted with DMAc such that the concentration thereof was adjusted to 8% by weight, 7.4 mL of pyridine and 3.8 mL of acetic anhydride were added to the solution, and the resulting solution was stirred at room temperature for 1 hour. Further, the solution was stirred for 4 hours while being heated to a temperature range of 60°C to 70°C in an oil bath. The polymerization solution was reprecipitated in methanol to extract the polymer, and the extracted polymer was washed several times in methanol. The polymer was dried at 60°C for 24 hours, thereby obtaining polyimide in a white to pale yellow powder state. The obtained polyimide was dissolved in cyclohexanone such that the solid content concentration of the polyimide reached 2.5% by mass, thereby obtaining a polyimide coating solution 1.

Generation of solid silica coating solution 1

300 g of 1-methoxy-2-propanol and 4 g of silica sol 1 were added to 25 g of a silica particle dispersion liquid PL-1 (manufactured by Fuso Chemical Co., Ltd.), thereby obtaining a solid silica coating solution 1.

Generation of aluminum oxide precursor coating solution

14.8 g of aluminum-sec-butoxide (ASBD, manufactured by Kawaken Fine Chemicals Co., Ltd.), 3.42 g of 3-methyl-2,4-pentanedione, and 2-ethylbutanol were mixed and stirred until a uniform mixture was obtained. 1.94 g of 0.01 M dilute hydrochloric acid was dissolved in a mixture solvent of 2-ethylbutanol and 1-ethoxy-2-propanol and slowly added to the solution of aluminum-sec-butoxide, and the solution was stirred for some time. The solvent was finally obtained as a mixed solvent of 36.9 g of 2-ethylbutanol and 15.8 g of 1-ethoxy-2-propanol. Further, the resulting solution was stirred in an oil bath at 120°C for 2 to 3 hours or longer, thereby obtaining an aluminum oxide precursor coating solution.

Film formation of each layer

The antireflection film 100 was formed using the polyimide coating solution 1, the solid silica coating solution 1, and the aluminum oxide precursor coating solution obtained in each of the above-described steps.

First, 0.2 mL of the polyimide coating solution 1 was added dropwise onto the surface of the base material 200 to spin-coat the surface with the coating solution at 4000 rpm for 20 seconds, thereby forming a first layer 1. Next, 0.2 mL of the solid silica coating solution 1 was continuously added dropwise onto the surface of the base material 200 to spin-coat the surface with the coating solution at 4000 rpm for 25 seconds, thereby forming a second layer 2. Further, 0.2 mL of the aluminum oxide precursor coating solution was added dropwise onto the surface of the base material 200 to spin-coat the surface with the coating solution at 4000 rpm for 20 seconds. Next, the solution was heated at 140°C for 60 minutes to be cured, and the base material was immersed in hot water at 80°C for 20 minutes and dried at 60°C for 15 minutes.

The surface and a cross section of the base material 200 were observed with an FE-SEM, and the presence of the fourth layer 4 as a concavo-convex layer on which fine plate-like crystals containing aluminum oxide as a main component were randomly formed and the third layer 3 as a residual layer containing aluminum oxide as a main component was confirmed.

The detailed configurations of the base material 200 and the antireflection film 100 according to the present example are listed in Table 1.

The refractive index and the film thickness of each material satisfy Inequalities (1) to (10). As shown in the upper graph of Fig. 2, the refractive index at the bottom portion of the fourth layer 4 (interface between the fourth layer 4 and the third layer 3) was 1.47 and continuously changed to 1.00 (air) at the top portion of the fourth layer 4 in the film thickness direction.

The lower graph of Fig. 2 shows the reflectance characteristics of the antireflection film 100 according to Example 1. The lower graph of Fig. 2 shows the reflectance of the antireflection film 100 for light having each wavelength that enters an intersection between the optical surface and the reference axis (the optical axis or the central axis) of the base material 200 at an incident angle of 0 degrees to 60 degrees. As shown in the lower graph of Fig. 2, it was found that the reflectance of the antireflection film 100 according to Example 1 at an incident angle of 0 degrees was 0.2% or less in a wavelength range of 400 nm to 700 nm, and satisfactory antireflection performance was obtained.

Further, the reflectance of the antireflection film 100 is suitably 0.5% or less and more suitably 0.2% or less for light entering at an incident angle of 0 degrees at least in a wavelength range of 450 nm or greater and 650 nm or less. In addition, the reflectance of the antireflection film 100 is suitably 1.0% or less and more suitably 0.8% or less for light entering at an incident angle of 30 degrees at least in a wavelength range of 450 nm or greater and 650 nm or less.

Example 2

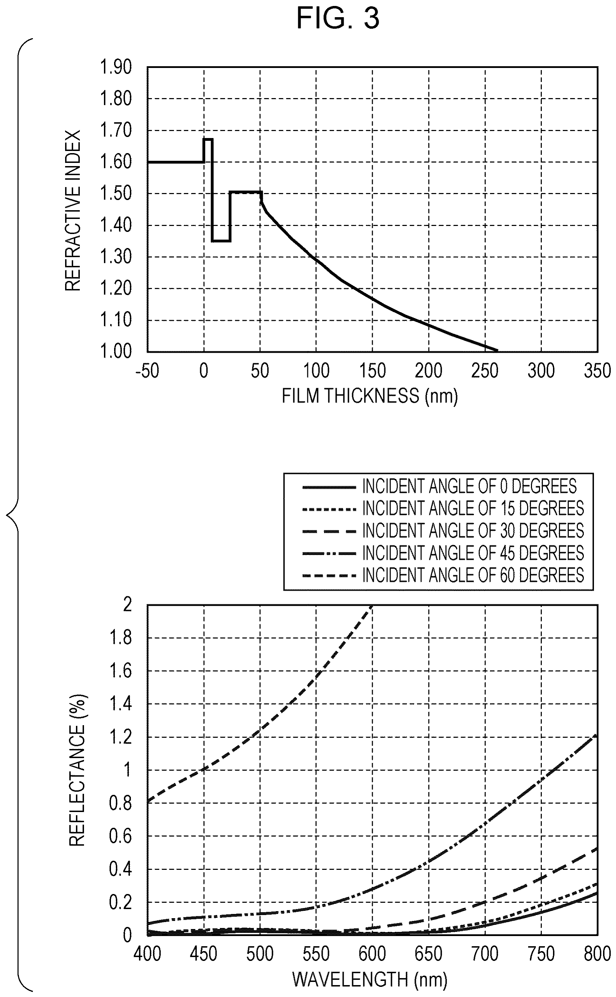

The upper graph of Fig. 3 shows a change in refractive index in the optical element 300 according to Example 2, that is, a refractive index structure of the base material 200 and the antireflection film 100. In the present example, the same configurations, the same production methods, and the like as in the example described above will not be repeated.

The base material 200 according to the present example is formed of S-BSM14 (manufactured by OHARA INC.) having a refractive index of 1.60. In the antireflection film 100 according to the present example, the first layer 1 is formed of a material containing a polyimide resin as a main component, the second layer 2 is formed of a material containing solid silica as a main component, and the third layer 3 and the fourth layer 4 are formed of a material containing aluminum oxide as a main component.

A method of forming the antireflection film 100 of the present example is as follows. Generation of polyimide coating solution 2

Two types of diamines, aromatic diamine 4,4'-bis(4-aminophenoxy)diphenyl (product name BODA, manufactured by SEIKA CORPORATION) and siloxane-containing diamine 1,3-bis(3-aminopropyl)tetramethyldisiloxane (product name PAM-E, manufactured by Shin-Etsu Chemical Co., Ltd.), were dissolved in N,N-dimethylacetamide (hereinafter, referred to as DMAc) such that the total amount thereof reached 12 mmol.

About 12 mmol of an acid dianhydride was added to this diamine solution while cooling the solution with water. As the acid dianhydride, 4-(2,5-dioxotetrahydrofuran-3-yl)-1,2,3,4-tetrahydronaphthalene-1,2-dicarboxylic anhydride (product name TDA-100, manufactured by New Japan Chemical Co., Ltd.) was used. The amount of DMAc was adjusted such that the total mass of the diamines and the acid dianhydride reached 20% by weight.

This solution was stirred at room temperature for 15 hours to carry out a polymerization reaction. Further, the solution was diluted with DMAc such that the concentration thereof was adjusted to 8% by weight, 7.4 mL of pyridine and 3.8 mL of acetic anhydride were added to the solution, and the resulting solution was stirred at room temperature for 1 hour. Further, the solution was stirred for 4 hours while being heated to a temperature range of 60°C to 70°C in an oil bath. The polymerization solution was reprecipitated in methanol to extract the polymer, and the extracted polymer was washed several times in methanol. The polymer was dried at 60°C for 24 hours, thereby obtaining polyimide in a white to pale yellow powder state. The obtained polyimide was dissolved in cyclohexanone such that the solid content concentration of the polyimide reached 1.8% by mass, thereby obtaining a polyimide coating solution 2.

Film formation of each layer

The antireflection film 100 was formed using the polyimide coating solution 2, the solid silica coating solution 1, and the aluminum oxide precursor coating solution obtained in the above-described steps.

First, 0.2 mL of the polyimide coating solution 2 was added dropwise onto the surface of the base material 200 to spin-coat the surface with the coating solution at 4000 rpm for 30 seconds, thereby forming a first layer 1. Next, 0.2 mL of the solid silica coating solution 1 was continuously added dropwise onto the surface of the base material 200 to spin-coat the surface with the coating solution at 4000 rpm for 30 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 1.

The refractive index and the film thickness of each material satisfy Inequalities (1) to (10). The lower graph of Fig. 3 shows the reflectance characteristics of the antireflection film 100 according to Example 2. As shown in the lower graph of Fig. 3, it was found that the reflectance of the antireflection film 100 according to Example 2 at an incident angle of 0 degrees was 0.2% or less in a wavelength range of 400 nm to 750 nm, and satisfactory antireflection performance was obtained.

Example 3

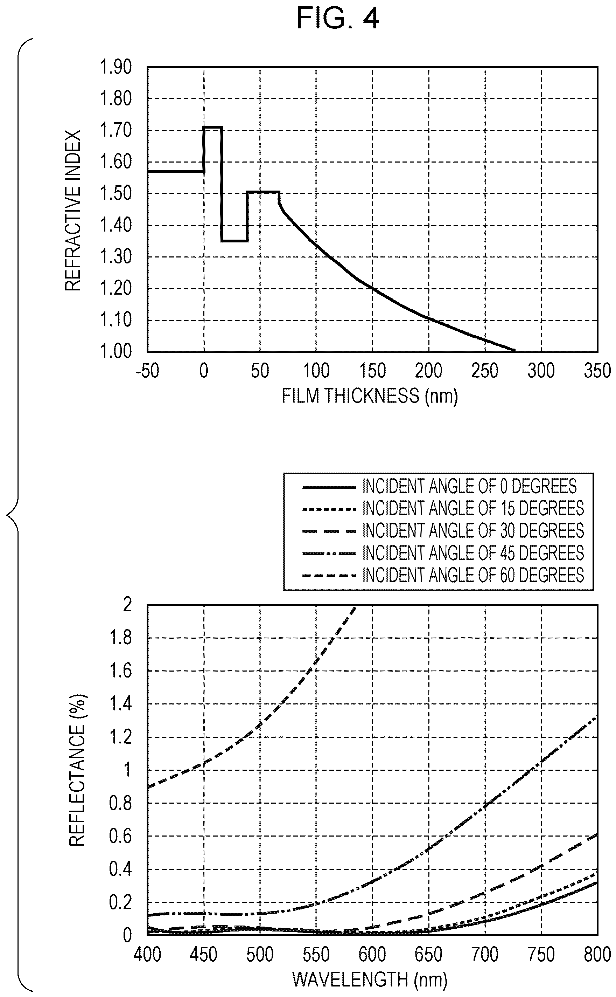

The upper graph of Fig. 4 shows a change in refractive index in the optical element 300 according to Example 3, that is, a refractive index structure of the base material 200 and the antireflection film 100. In the present example, the same configurations, the same production methods, and the like as in the other examples described above will not be repeated.

The base material 200 according to the present example is formed of S-TIL26 (manufactured by OHARA INC.) having a refractive index of 1.57. In the antireflection film 100 according to the present example, the first layer 1 is formed of a material containing a polyimide resin and a branched melamine resin as main components, the second layer 2 is formed of a material containing solid silica as a main component, and the third layer 3 and the fourth layer 4 are formed of a material containing aluminum oxide as a main component.

A method of forming the antireflection film 100 of the present example is as follows.

Generation of blended polymer coating solution 1 of branched melamine polymer and polyimide

A photocurable coating material (product name HYPER TECH UR101, manufactured by Nissan chemical Corporation) of a branched melamine polymer was diluted with a cyclopentanone/cyclohexanone mixed solvent such that the concentration thereof reached 2.5% by mass, thereby obtaining a branched melamine polymer solution. 30.0 g of the branched melamine polymer solution and 25.0 g of the polyimide coating solution 1 obtained in Example 1 were stirred and mixed in this proportion at room temperature to obtain a blended polymer coating solution 1 of the branched melamine polymer and the polyimide. Film formation of each layer

The antireflection film 100 was formed using the blended polymer coating solution 1, the solid silica coating solution 1, and the aluminum oxide precursor coating solution obtained in the above-described steps.

First, 0.2 mL of the blended polymer coating solution 1 was added dropwise onto the surface of the base material 200 to spin-coat the surface with the coating solution at 4000 rpm for 25 seconds, thereby forming a first layer 1. Next, 0.2 mL of the solid silica coating solution 1 was continuously added dropwise onto the surface of the base material 200 to spin-coat the surface with the coating solution at 4000 rpm for 20 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 1.

The refractive index and the film thickness of each material satisfy Inequalities (1) to (10). The lower graph of Fig. 4 shows the reflectance characteristics of the antireflection film 100 according to Example 3. As shown in the lower graph of Fig. 4, it was found that the reflectance of the antireflection film 100 according to Example 3 at an incident angle of 0 degrees was 0.2% or less in a wavelength range of 400 nm to 750 nm, and satisfactory antireflection performance was obtained.

Example 4

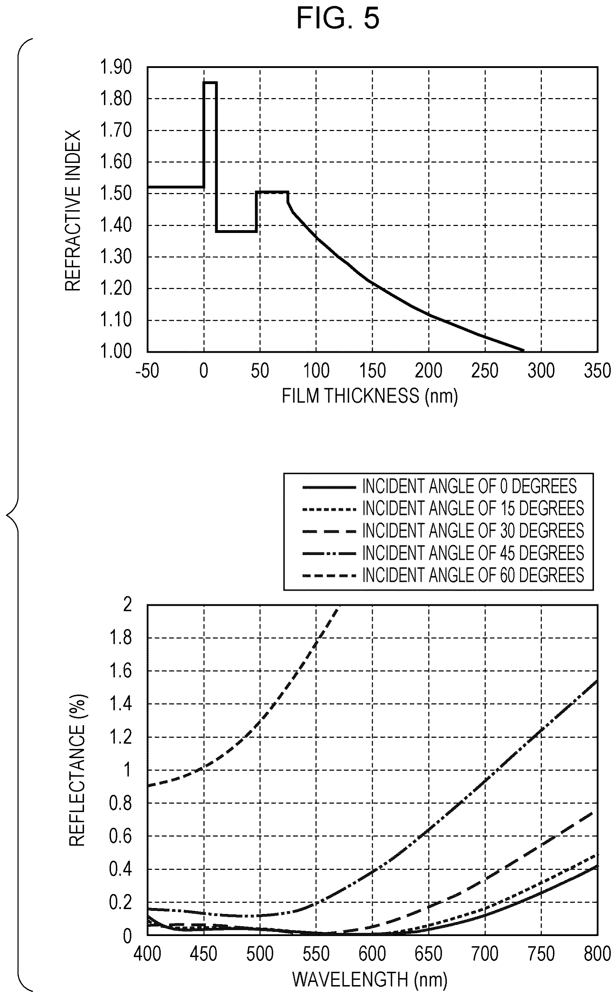

The upper graph of Fig. 5 shows a change in refractive index in the optical element 300 according to Example 4, that is, a refractive index structure of the base material 200 and the antireflection film 100. In the present example, the same configurations, the same production methods, and the like as in the other examples described above will not be repeated.

The base material 200 according to the present example is formed of S-BSL7 (manufactured by OHARA INC.) having a refractive index of 1.52. In the antireflection film 100 according to the present example, the first layer 1 is formed of a material containing a polyimide resin and a branched melamine resin as main components, the second layer 2 is formed of a material containing solid silica as a main component, and the third layer 3 and the fourth layer 4 are formed of a material containing aluminum oxide as a main component.

A method of forming the antireflection film 100 of the present example is as follows. Generation of solid silica coating solution 2

300 g of 1-methoxy-2-propanol and 5 g of silica sol 1 were added to 25 g of a silica particle dispersion liquid PL-1 (manufactured by Fuso Chemical Co., Ltd.), thereby obtaining a solid silica coating solution 2.

Generation of blended polymer coating solution 2 of branched melamine polymer and polyimide

A photocurable coating material (product name HYPER TECH UR101, manufactured by Nissan chemical Corporation) of a branched melamine polymer was diluted with a cyclopentanone/cyclohexanone mixed solvent such that the concentration thereof reached 1.0% by mass, thereby obtaining a branched melamine polymer solution. 30.0 g of the branched melamine polymer solution and 15.0 g of the polyimide coating solution 2 obtained in Example 2 were stirred and mixed in this proportion at room temperature to obtain a blended polymer coating solution 2 of the branched melamine polymer and the polyimide. Film formation of each layer

The antireflection film 100 was formed using the blended polymer coating solution 2, the solid silica coating solution 2, and the aluminum oxide precursor coating solution obtained in the above-described steps.

First, 0.2 mL of the blended polymer coating solution 2 was added dropwise onto the surface of the base material 200 to spin-coat the surface with the coating solution at 4000 rpm for 20 seconds, thereby forming a first layer 1. Next, 0.2 mL of the solid silica coating solution 2 was continuously added dropwise onto the surface of the base material 200 to spin-coat the surface with the coating solution at 4000 rpm for 25 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 1.

The refractive index and the film thickness of each material satisfy Inequalities (1) to (10). The lower graph of Fig. 5 shows the reflectance characteristics of the antireflection film 100 according to Example 4. As shown in the lower graph of Fig. 5, it was found that the reflectance of the antireflection film 100 according to Example 4 at an incident angle of 0 degrees was 0.2% or less in a wavelength range of 400 nm to 700 nm, and satisfactory antireflection performance was obtained.


Example 5

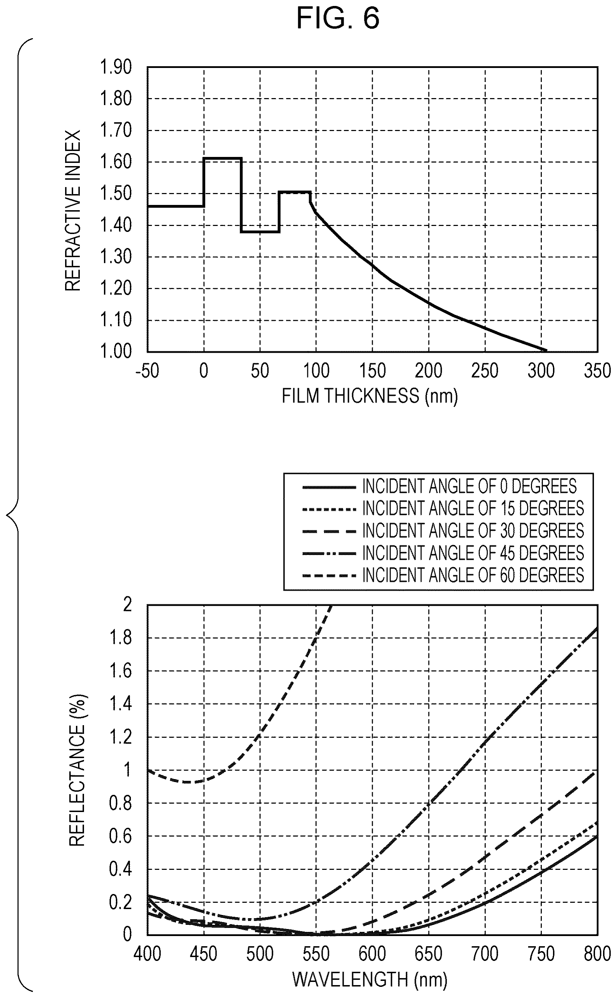

The upper graph of Fig. 6 shows a change in refractive index in the optical element 300 according to Example 5, that is, a refractive index structure of the base material 200 and the antireflection film 100. In the present example, the same configurations, the same production methods, and the like as in the other examples described above will not be repeated.

The base material 200 according to the present example is formed of quartz having a refractive index of 1.46. In the antireflection film 100 according to the present example, the first layer 1 is formed of a material containing a polyimide resin as a main component, the second layer 2 is formed of a material containing solid silica as a main component, and the third layer 3 and the fourth layer 4 are formed of a material containing aluminum oxide as a main component.

A method of forming the antireflection film 100 of the present example is as follows. Film formation of each layer

The antireflection film 100 was formed using the polyimide coating solution 1, the solid silica coating solution 2, and the aluminum oxide precursor coating solution obtained in the above-described steps.

First, 0.2 mL of the polyimide coating solution 1 was added dropwise onto the surface of the base material 200 to spin-coat the surface with the coating solution at 4000 rpm for 20 seconds, thereby forming a first layer 1. Next, 0.2 mL of the solid silica coating solution 2 was continuously added dropwise onto the surface of the base material 200 to spin-coat the surface with the coating solution at 4000 rpm for 20 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 1.

The refractive index and the film thickness of each material satisfy Inequalities (1) to (10). The lower graph of Fig. 6 shows the reflectance characteristics of the antireflection film 100 according to Example 5. As shown in the lower graph of Fig. 6, it was found that the reflectance of the antireflection film 100 according to Example 5 at an incident angle of 0 degrees was 0.2% or less in a wavelength range of 410 nm to 680 nm, and satisfactory antireflection performance was obtained.

Table 1

| | | | Example 1 | Example 2 | Example 3 | Example 4 | Example 5 |
|---|---|---|---|---|---|---|---|
| Antireflection film 100 | Fourth layer 4 | Name of material | Aluminum oxide | Aluminum oxide | Aluminum oxide | Aluminum oxide | Aluminum oxide |
| | | Refractive index (maximum) | 1.47 | 1.47 | 1.47 | 1.47 | 1.47 |
| | | Film thickness (nm) | 209.6 | 209.6 | 209.6 | 209.6 | 209.6 |
| | Third layer 3 | Name of material | Aluminum oxide | Aluminum oxide | Aluminum oxide | Aluminum oxide | Aluminum oxide |
| | | Refractive index | 1.50 | 1.50 | 1.50 | 1.50 | 1.50 |
| | | Film thickness (nm) | 28.2 | 28.2 | 28.2 | 28.2 | 28.2 |
| | Second layer 2 | Name of material | Solid silica | Solid silica | Solid silica | Solid silica | Solid silica |
| | | Refractive index | 1.35 | 1.35 | 1.35 | 1.38 | 1.38 |
| | | Film thickness (nm) | 23.7 | 15.2 | 23.4 | 35.1 | 33.4 |
| | First layer 1 | Name of material | Polyimide | Polyimide | Polyimide/branched melamine | Polyimide/branched melamine | Polyimide |
| | | Refractive index | 1.61 | 1.67 | 1.75 | 1.85 | 1.61 |
| | | Film thickness (nm) | 35.4 | 7.6 | 13.1 | 11.7 | 32.4 |
| Base material 200 | | Name of material | S-BSL7 | S-BSM14 | S-TIL26 | S-BSL7 | Quartz |
| | | Refractive index | 1.52 | 1.60 | 1.57 | 1.52 | 1.46 |

Example 6

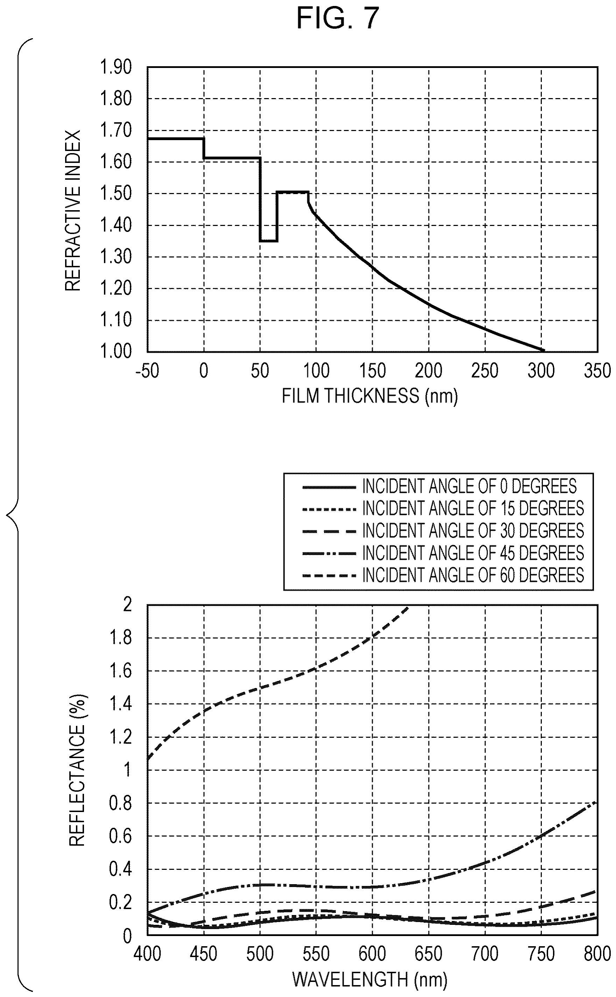

The upper graph of Fig. 7 shows a change in refractive index in the optical element 300 according to Example 6, that is, a refractive index structure of the base material 200 and the antireflection film 100. In the present example, the same configurations, the same production methods, and the like as in the other examples described above will not be repeated.

The base material 200 according to the present example is formed of S-BAH32 (manufactured by OHARA INC.) having a refractive index of 1.67. In the antireflection film 100 according to the present example, the first layer 1 is formed of a material containing a polyimide resin as a main component, the second layer 2 is formed of a material containing solid silica as a main component, and the third layer 3 and the fourth layer 4 are formed of a material containing aluminum oxide as a main component.

A method of forming the antireflection film 100 of the present example is as follows. Film formation of each layer

The antireflection film 100 was formed using the polyimide coating solution 1, the solid silica coating solution 1, and the aluminum oxide precursor coating solution obtained in each of the above-described steps.

First, 0.2 mL of the polyimide coating solution 1 was added dropwise onto the surface of the base material 200 to spin-coat the surface with the coating solution at 4000 rpm for 30 seconds, thereby forming a first layer 1. Next, 0.2 mL of the solid silica coating solution 1 was continuously added dropwise onto the surface of the base material 200 to spin-coat the surface with the coating solution at 4000 rpm for 15 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 2.

The refractive index and the film thickness of each material satisfy Inequalities (1) to (9) and (11). The lower graph of Fig. 7 shows the reflectance characteristics of the antireflection film 100 according to Example 6. As shown in the lower graph of Fig. 7, it was found that the reflectance of the antireflection film 100 according to Example 6 at an incident angle of 0 degrees was 0.2% or less in a wavelength range of 400 nm to 800 nm, and satisfactory antireflection performance was obtained.

Example 7

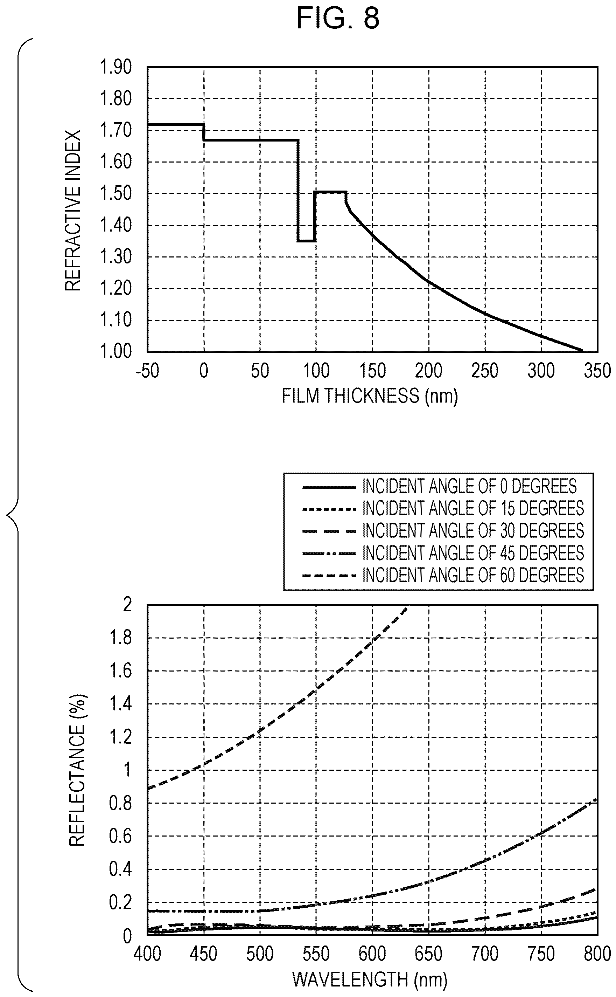

The upper graph of Fig. 8 shows a change in refractive index in the optical element 300 according to Example 7, that is, a refractive index structure of the base material 200 and the antireflection film 100. In the present example, the same configurations, the same production methods, and the like as in the other examples described above will not be repeated.

The base material 200 according to the present example is formed of S-BAH28 (manufactured by OHARA INC.) having a refractive index of 1.72. In the antireflection film 100 according to the present example, the first layer 1 is formed of a material containing a polyimide resin as a main component, the second layer 2 is formed of a material containing solid silica as a main component, and the third layer 3 and the fourth layer 4 are formed of a material containing aluminum oxide as a main component.

A method of forming the antireflection film 100 of the present example is as follows. Film formation of each layer

The antireflection film 100 was formed using the polyimide coating solution 2, the solid silica coating solution 1, and the aluminum oxide precursor coating solution obtained in each of the above-described steps.

First, 0.2 mL of the polyimide coating solution 2 was added dropwise onto the surface of the base material 200 to spin-coat the surface with the coating solution at 4000 rpm for 30 seconds, thereby forming a first layer 1. Next, 0.2 mL of the solid silica coating solution 1 was continuously added dropwise onto the surface of the base material 200 to spin-coat the surface with the coating solution at 4000 rpm for 10 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 2.

The refractive index and the film thickness of each material satisfy Inequalities (1) to (9) and (11). The lower graph of Fig. 8 shows the reflectance characteristics of the antireflection film 100 according to Example 7. As shown in the lower graph of Fig. 8, it was found that the reflectance of the antireflection film 100 according to Example 7 at an incident angle of 0 degrees was 0.2% or less in a wavelength range of 400 nm to 800 nm, and satisfactory antireflection performance was obtained.

Example 8

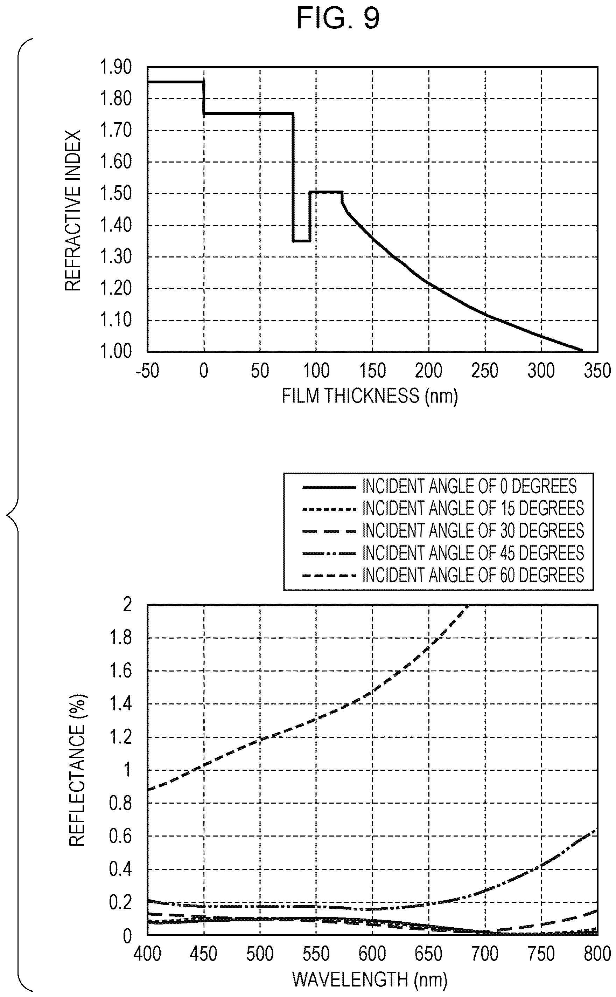

The upper graph of Fig. 9 shows a change in refractive index in the optical element 300 according to Example 8, that is, a refractive index structure of the base material 200 and the antireflection film 100. In the present example, the same configurations, the same production methods, and the like as in the other examples described above will not be repeated.

The base material 200 according to the present example is formed of S-TIH53 (manufactured by OHARA INC.)

having a refractive index of 1.85. In the antireflection film 100 according to the present example, the first layer 1 is formed of a material containing a polyimide resin and a branched melamine resin as main components, the second layer 2 is formed of a material containing solid silica as a main component, and the third layer 3 and the fourth layer 4 are formed of a material containing aluminum oxide as a main component.

A method of forming the antireflection film 100 of the present example is as follows. Film formation of each layer

The antireflection film 100 was formed using the blended polymer coating solution 1, the solid silica coating solution 1, and the aluminum oxide precursor coating solution obtained in each of the above-described steps.

First, 0.2 mL of the blended polymer coating solution 1 was added dropwise onto the surface of the base material 200 to spin-coat the surface with the coating solution at 4000 rpm for 30 seconds, thereby forming a first layer 1. Next, 0.2 mL of the solid silica coating solution 1 was continuously added dropwise onto the surface of the base material 200 to spin-coat the surface with the coating solution at 4000 rpm for 10 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 2.

The refractive index and the film thickness of each material satisfy Inequalities (1) to (9) and (11). The lower graph of Fig. 9 shows the reflectance characteristics of the antireflection film 100 according to Example 8. As shown in the lower graph of Fig. 9, it was found that the reflectance of the antireflection film 100 according to Example 8 at an incident angle of 0 degrees was 0.2% or less in a wavelength range of 400 nm to 800 nm, and satisfactory antireflection performance was obtained.

Example 9

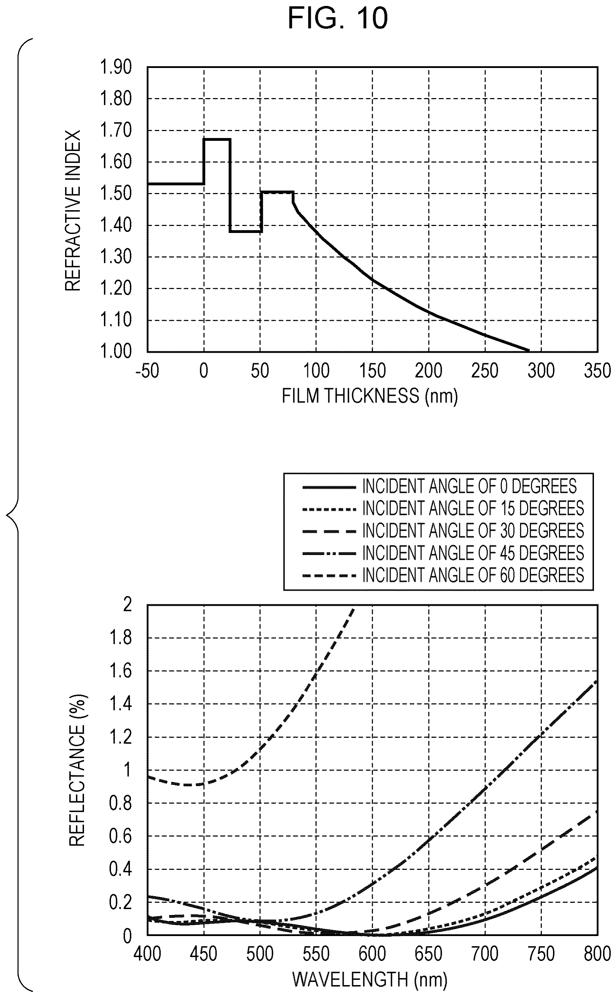

The upper graph of Fig. 10 shows a change in refractive index in the optical element 300 according to Example 9, that is, a refractive index structure of the base material 200 and the antireflection film 100. In the present example, the same configurations, the same production methods, and the like as in the other examples described above will not be repeated.

The base material 200 according to the present example is formed of ZEONEX K22R (manufactured by Zeon Corporation) having a refractive index of 1.53. In the antireflection film 100 according to the present example, the first layer 1 is formed of a material containing a polyimide resin as a main component, the second layer 2 is formed of a material containing solid silica as a main component, and the third layer 3 and the fourth layer 4 are formed of a material containing aluminum oxide as a main component.

A method of forming the antireflection film 100 of the present example is as follows. Film formation of each layer

The antireflection film 100 was formed using the polyimide coating solution 2, the solid silica coating solution 2, and the aluminum oxide precursor coating solution obtained in each of the above-described steps.

First, 0.2 mL of the polyimide coating solution 2 was added dropwise onto the surface of the base material 200 to spin-coat the surface with the coating solution at 4000 rpm for 20 seconds, thereby forming a first layer 1. Next, 0.2 mL of the solid silica coating solution 2 was continuously added dropwise onto the surface of the base material 200 to spin-coat the surface with the coating solution at 4000 rpm for 22 seconds, thereby forming a second layer 2. The film forming method for the third layer 3 and the fourth layer 4 is the same as in Example 1, and thus the description thereof will not be repeated.

The detailed configurations of the base material 200 and the antireflection film 100 according to the present example are listed in Table 2.

The refractive index and the film thickness of each material satisfy Inequalities (1) to (10). The lower graph of Fig. 10 shows the reflectance characteristics of the antireflection film 100 according to Example 9. As shown in the lower graph of Fig. 10, it was found that the reflectance of the antireflection film 100 according to Example 9 at an incident angle of 0 degrees was 0.2% or less in a wavelength range of 400 nm to 700 nm, and satisfactory antireflection performance was obtained.

Table 2

| | | | Example 6 | Example 7 | Example 8 | Example 9 |
|---|---|---|---|---|---|---|
| Antireflection film 100 | Fourth layer 4 | Name of material | Aluminum oxide | Aluminum oxide | Aluminum oxide | Aluminum oxide |
| | | Refractive index (maximum) | 1.47 | 1.47 | 1.47 | 1.47 |
| | | Film thickness (nm) | 209.6 | 209.6 | 209.6 | 209.6 |
| | Third layer 3 | Name of material | Aluminum oxide | Aluminum oxide | Aluminum oxide | Aluminum oxide |
| | | Refractive index | 1.50 | 1.50 | 1.50 | 1.50 |
| | | Film thickness (nm) | 28.2 | 28.2 | 28.2 | 28.2 |
| | Second layer 2 | Name of material | Solid silica | Solid silica | Solid silica | Solid silica |
| | | Refractive index | 1.35 | 1.35 | 1.35 | 1.38 |
| | | Film thickness (nm) | 15.0 | 15.0 | 15.0 | 28.1 |
| | First layer 1 | Name of material | Polyimide | Polyimide | Polyimide/branched melamine | Polyimide |
| | | Refractive index | 1.61 | 1.67 | 1.71 | 1.67 |
| | | Film thickness (nm) | 50.0 | 84.1 | 79.5 | 23.0 |
| Base material 200 | | Name of material | S-BAH32 | S-BAH28 | S-TIH53 | K22R |
| | | Refractive index | 1.67 | 1.72 | 1.85 | 1.53 |

Hereinbefore, the antireflection film formed of four layers has been described as a first embodiment, but the present disclosure is not limited thereto, and an antireflection film formed of five or more layers may be employed. The freedom degree of design of the antireflection film can be further improved by increasing the number of layers constituting the antireflection film. As a result, the antireflection performance may be further improved than the antireflection performance of the antireflection film formed of four layers depending on the material of the base material.

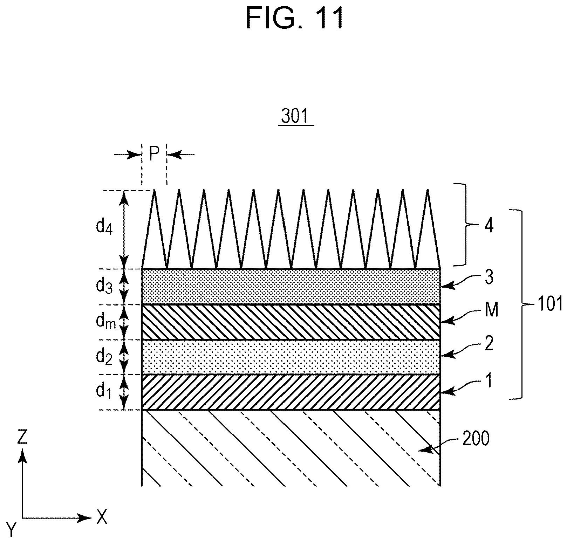

Fig. 11 is a schematic view showing an optical element 301 including an antireflection film 101 according to a second embodiment and the base material (transparent substrate) 200. The antireflection film 101 includes a first layer (first thin film layer) 1, a second layer (second thin film layer) 2, an intermediate layer (third thin film layer) M, a third layer (fourth thin film layer) 3, and a fourth layer (refractive index changing layer) 4, which are disposed in order from the side of the base material 200 to the air side. Hereinafter, a specific example of the present embodiment will be described. However, this example is merely an example of the present embodiment, and the present disclosure is not limited to the scope of the example.

Example 10

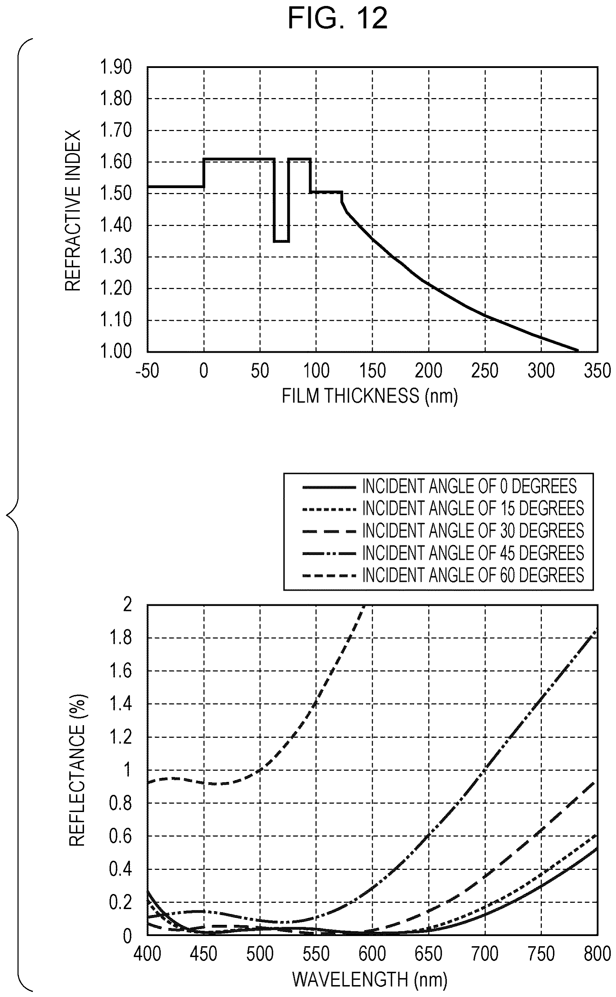

The upper graph of Fig. 12 shows a change in refractive index in the optical element 301 according to Example 10, that is, a refractive index structure of the base material 200 and the antireflection film 101. In the present example, the same configurations, the same production methods, and the like as in the other examples described above will not be repeated.

The base material 200 according to the present example is formed of S-BSL7 (manufactured by OHARA INC.)

having a refractive index of 1.52. In the antireflection film 101 according to the present example, the first layer 1 and the intermediate layer M are formed of a material containing a polyimide resin as a main component, the second layer 2 is formed of a material containing solid silica as a main component, and the third layer 3 and the fourth layer 4 are formed of a material containing aluminum oxide as a main component.

A method of forming the antireflection film 101 of the present example is as follows. Film formation of each layer

The antireflection film 101 was formed using the polyimide coating solution 1, the solid silica coating solution 1, and the aluminum oxide precursor coating solution obtained in each of the above-described steps.

First, 0.2 mL of the polyimide coating solution 1 was added dropwise onto the surface of the base material 200 to spin-coat the surface with the coating solution at 4000 rpm for 13 seconds, thereby forming a first layer 1. Next, 0.2 mL of the solid silica coating solution 1 was continuously added dropwise onto the surface of the base material 200 to spin-coat the surface with the coating solution at 4000 rpm for 18 seconds, thereby forming a second layer 2. Next, 0.2 mL of the polyimide coating solution 1 was continuously added dropwise onto the surface of the base material 200 to spin-coat the surface with the coating solution at 4000 rpm for 24 seconds, thereby forming an intermediate layer M. The film forming method for the third layer 3 and the fourth layer 4 is the same as in Example 1, and thus the description thereof will not be repeated.

In this manner, the respective film forming methods can be standardized by forming the first layer 1 and the intermediate layer M from the same material, and thus the antireflection film 101 can be easily produced. In this case, a film thickness $d_m$ of the intermediate layer M can be made thinner than a film thickness $d_1$ of the first layer 1.

The detailed configurations of the base material 200 and the antireflection film 101 according to the present example are listed in Table 3.

The refractive index and the film thickness of each material satisfy Inequalities (1) to (10). The lower graph of Fig. 12 shows the reflectance characteristics of the antireflection film 101 according to Example 10. As shown in the lower graph of Fig. 12, it was found that the reflectance of the antireflection film 101 according to Example 10 at an incident angle of 0 degrees was 0.2% or less in a wavelength range of 420 nm to 700 nm, and satisfactory antireflection performance was obtained.

Table 3

| | | | Example 10 |
|---|---|---|---|
| Antireflection film 101 | Fourth layer 4 | Name of material | Aluminum oxide |
| | | Refractive index (maximum) | 1.47 |
| | | Film thickness (nm) | 209.6 |
| | Third layer 3 | Name of material | Aluminum oxide |
| | | Refractive index | 1.50 |
| | | Film thickness (nm) | 28.2 |
| | Intermediate layer M | Name of material | Polyimide |
| | | Refractive index | 1.61 |
| | | Film thickness (nm) | 19.4 |
| | Second layer 2 | Name of material | Solid silica |
| | | Refractive index | 1.35 |
| | | Film thickness (nm) | 13.0 |
| | First layer 1 | Name of material | Polyimide |
| | | Refractive index | 1.61 |
| | | Film thickness (nm) | 62.4 |
| Base material 200 | | Name of material | S-BAL7 |
| | | Refractive index | 1.52 |

Optical system and optical device

Next, an optical system 400 and an optical device 500 as embodiments will be described.

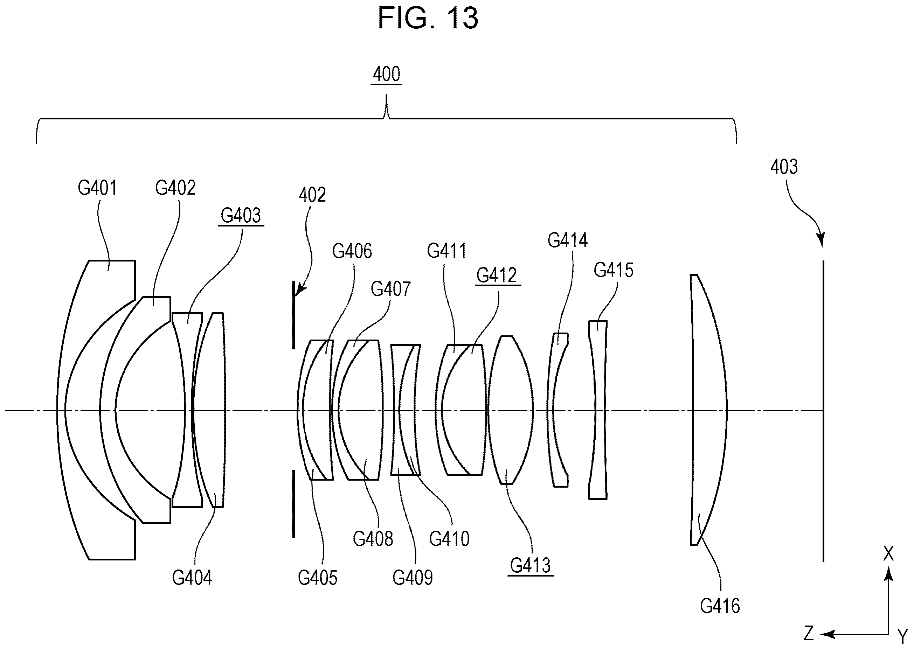

Fig. 13 is a schematic view showing a cross section having an optical axis (dashed line) of the optical system 400 according to the present embodiment. The optical system 400 is an image-forming optical system that includes a plurality of optical elements (lenses) G401 to G416 and an aperture stop 402 and forms an image of an object on an image surface 403. At least one of an incident surface and an emitting surface of at least one of the optical elements G401 to G416 is provided with the antireflection film 100 according to the embodiment described above. Further, in order to obtain satisfactory antireflection performance in the entire optical system 400, the antireflection film 100 is provided suitably on all the optical elements and more suitably on both the incident surface and the emitting surface of each optical element. Further, in a case where a prism, a filter, or the like is employed as the optical element, the antireflection film 100 can be provided thereon.

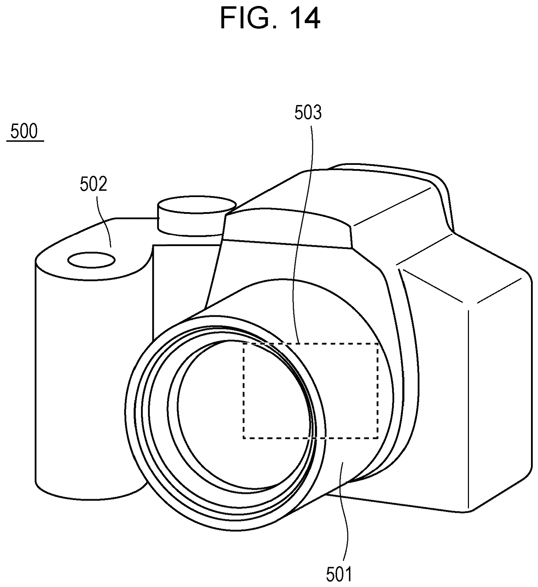

Fig. 14 is a schematic view showing an image pickup apparatus (digital camera) 500 as the optical device according to the present embodiment. An image pickup apparatus 500 includes a lens portion 501 including the optical system 400 and a main body portion 502 including an image pickup element 503. Each optical element constituting the optical system 400 is held by a holding member (lens barrel) in the lens portion 501. The image pickup element 503 is an element that captures an image of an object by receiving light from the optical system 400, and for example, a photoelectric conversion element such as a CCD sensor or a CMOS sensor can be employed. The image pickup element 503 is disposed such that the image pickup surface (light receiving surface) thereof coincides with the image surface 403 of the optical system 400.

The lens portion 501 may be integrated with the main body portion 502 or may be configured to be detachable (replaceable) from the main body portion 502. In a case where the lens portion 501 and the main body portion 502 are detachable from each other, the lens portion 501 can be regarded as one optical device (lens device), and the main body portion 502 can be regarded as one optical device (image pickup apparatus). Further, the optical element according to each example is not limited to being used for the image pickup apparatus described above, and can also be applied to various optical devices such as a binocular, a projector (projection device), and a telescope.

Modified examples

Hereinbefore, suitable embodiments and examples of the present disclosure have been described, but the present disclosure is not limited to these embodiments and examples, and various combinations, modifications, and changes can be made within the scope of the gist of the present disclosure.

In each of the above-described examples, a concavo-convex layer is employed as the refractive index changing layer which is the uppermost layer, but a refractive index changing layer other than the concavo-convex layer may be employed. For example, a refractive index changing layer may be formed by infiltrating another material between fine particles in a layer containing fine particles such as solid particles or hollow particles and changing the space occupation ratio of the material in the film thickness direction. Even in a case where such a configuration is employed, a refractive index changing layer can be formed by the wet film forming method, such as a spin coat method, described above.

Various embodiments have been described in detail above but it will be understood that the present disclosure is not limited to these embodiments and encompasses all modifications, variants, alternatives and equivalents falling within the scope of the appended claims.

**Claims**

1.  An antireflection film (100) that is formed on an optical surface of a base material (200), the antireflection film (100) comprising:

    first to fourth layers (1 - 4) disposed in order from a side of the base material (200),
    wherein the fourth layer (4) has a refractive index that decreases as the fourth layer (4) is away from the base material (200), and
    wherein the following inequalities are satisfied:

    $$n1 > n2,$$

    $$n2 < n3,$$

    and

    $$n3 > n4$$

where n1, n2, and n3 are refractive indices of the first to third layers (1 - 3) respectively at a wavelength of 550 nm, and

n4 is a maximum value of the refractive index of the fourth layer (4) at a wavelength of 550 nm.

2. The antireflection film according to claim 1,
   wherein the first layer is in contact with the optical surface and contains an organic compound having at least one of an aromatic ring and an imide ring.

3. The antireflection film according to claim 1 or 2,
   wherein the second layer contains an organic compound.

4. The antireflection film according to any one of claims 1 to 3,
   wherein the third layer and the fourth layer each contain aluminum oxide.

5. The antireflection film according to any one of claims 1 to 4,
   wherein the following inequalities are satisfied:

$$1.52 \leq n1 \leq 1.85,$$

$$1.25 \leq n2 < 1.45,$$

and

$$1.40 \leq n3 \leq 1.60.$$

6. The antireflection film according to any one of claims 1 to 5, wherein the following inequalities are satisfied:

$$3 \text{ nm} \leq d1 \leq 90 \text{ nm},$$

$$5 \text{ nm} \leq d2 \leq 45 \text{ nm},$$

and

$$100 \text{ nm} \leq d3 + d4 \leq 350 \text{ nm}$$

where d1, d2, d3, and d4 are film thicknesses of the first to fourth layers respectively.

7. The antireflection film according to any one of claims 1 to 6,

   wherein the following inequalities are satisfied:

$$3 \text{ nm} \leq d3 \leq 50 \text{ nm and}$$

$$150 \text{ nm} \leq d4 \leq 300 \text{ nm}$$

where d3, and d4 are film thicknesses of the third and fourth layers respectively.

8. The antireflection film according to any one of claims 1 to 7,
   wherein the following inequality is satisfied:

$$n2 < nsub < n1$$

where nsub is a refractive index of the base material.

9. The antireflection film according to any one of claims 1 to 8,
   wherein the first layer (1) contains a polyimide resin or a maleimide resin.

10. The antireflection film according to any one of claims 1 to 9,
    wherein the first layer (1) contains thermoplastic polyimide.

11. The antireflection film according to any one of claims 1 to 10,
    wherein the second layer (2) contains particles made of silicon dioxide.

12. The antireflection film according to any one of claims 1 to 11,
    wherein the third layer (3) is a porous layer containing aluminum oxide.

13. The antireflection film according to claim 12,
    wherein the third layer (3) contains phosphorus.

14. The antireflection film according to any one of claims 1 to 13,
    wherein the fourth layer (4) has a plurality of convex portions arranged at a pitch shorter than a used wavelength.

15. The antireflection film according to any one of claims 1 to 14,
    wherein a reflectance for light that enters an intersection between the optical surface and a reference axis of the optical surface at an incident angle of 0 degrees is 0.5% or less in a wavelength range of 450 nm or greater and 650 nm or less.

16. The antireflection film according to any one of claims 1 to 15,
    wherein a reflectance for light that enters an intersection between the optical surface and a reference axis of the optical surface at an incident angle of 30 degrees is 1.0% or less in a wavelength range of 450 nm or greater and 650 nm or less.

17. An optical element (300) comprising:

    the antireflection film (100) according to any one of claims 1 to 16, and
    the base material (200).

18. An optical system (400) comprising:
    a plurality of optical elements including the optical element (300) according to claim 17.

19. An optical device (500) comprising:

    the optical element (300) according to claim 17; and
    a holding member that holds the optical element (300).

20. An image pickup apparatus (500) comprising:

    the optical element (300) according to claim 17; and
    an image pickup element (503) that receives light from the optical element (300).

# FIG. 1

# FIG. 2

# FIG. 3

# FIG. 4

# FIG. 5

# FIG. 6

# FIG. 7

# FIG. 8

# FIG. 9

# FIG. 10

# FIG. 11

<u>301</u>

# FIG. 12

FIG. 13

# FIG. 14

Europäisches
Patentamt
European
Patent Office
Office européen
des brevets

**Application Number**

EP 25 21 1975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 135445 A (CANON KK) 27 July 2015 (2015-07-27) | 1,3,4, 6-8, 11-20 | INV. G02B1/111 C03C17/34 |
| Y | * paragraphs [0006] - [0008], [0013] - [0015], [0020] - [0062]; figures 1-20 * ----- | 1-20 | G02B1/118 |
| X | US 2016/061996 A1 (ISHIMATSU RIE [JP]) 3 March 2016 (2016-03-03) * paragraphs [0030] - [0047]; figures 1-2, 8A, 9a, 11A, 13A, 16 * ----- | 1,4,5,7, 8,11-20 | |
| Y | US 2015/369967 A1 (OKUNO TAKEHARU [JP] ET AL) 24 December 2015 (2015-12-24) * paragraphs [0030] - [0061]; figures 1, 2, 16 * ----- | 1-20 | |
| Y | US 2024/142667 A1 (UCHIDA KAZUE [JP]) 2 May 2024 (2024-05-02) * paragraphs [0105] - [0136] * ----- | 2,9,10 | |
| A | US 2021/199855 A1 (MAKINO KENJI [JP] ET AL) 1 July 2021 (2021-07-01) * the whole document * ----- | 1-20 | TECHNICAL FIELDS SEARCHED (IPC) G02B C03C |
| A | US 2017/176644 A1 (NAKAYAMA TOMONARI [JP]) 22 June 2017 (2017-06-22) * the whole document * ----- | 1-20 | H04N |
| A | JP 2019 109502 A (CANON KK) 4 July 2019 (2019-07-04) * the whole document * ----- | 1-20 | |

The present search report has been drawn up for all claims

| Place of search | Date of completion of the search | Examiner |
|---|---|---|
| Munich | 12 March 2026 | Knorn, Raphaela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 1975

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2026

| Patent document cited in search report | | | Publication date | Patent family member(s) | | Publication date |
|---|---|---|---|---|---|---|
| JP 2015135445 | A | | 27-07-2015 | NONE | | |
| US 2016061996 | A1 | | 03-03-2016 | JP | 6362105 B2 | 25-07-2018 |
| | | | | JP | 2016048296 A | 07-04-2016 |
| | | | | US | 2016061996 A1 | 03-03-2016 |
| US 2015369967 | A1 | | 24-12-2015 | CN | 102901996 A | 30-01-2013 |
| | | | | JP | 5936444 B2 | 22-06-2016 |
| | | | | JP | 2013047780 A | 07-03-2013 |
| | | | | US | 2013027779 A1 | 31-01-2013 |
| | | | | US | 2015369967 A1 | 24-12-2015 |
| US 2024142667 | A1 | | 02-05-2024 | CN | 117950093 A | 30-04-2024 |
| | | | | DE | 102023129890 A1 | 02-05-2024 |
| | | | | GB | 2625879 A | 03-07-2024 |
| | | | | JP | 2024065315 A | 15-05-2024 |
| | | | | US | 2024142667 A1 | 02-05-2024 |
| US 2021199855 | A1 | | 01-07-2021 | EP | 2696221 A1 | 12-02-2014 |
| | | | | JP | 6071318 B2 | 01-02-2017 |
| | | | | JP | 2014035475 A | 24-02-2014 |
| | | | | US | 2014044919 A1 | 13-02-2014 |
| | | | | US | 2018156942 A1 | 07-06-2018 |
| | | | | US | 2021199855 A1 | 01-07-2021 |
| US 2017176644 | A1 | | 22-06-2017 | JP | 6501506 B2 | 17-04-2019 |
| | | | | JP | 2015127810 A | 09-07-2015 |
| | | | | US | 2017176644 A1 | 22-06-2017 |
| | | | | WO | 2015080030 A1 | 04-06-2015 |
| JP 2019109502 | A | | 04-07-2019 | JP | 7378924 B2 | 14-11-2023 |
| | | | | JP | 2019109502 A | 04-07-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2014021146 A